# EUROPEAN PATENT APPLICATION

(11) **EP 4 539 430 A1**
(43) Date of publication of application: **16.04.2025**
(21) Application number: 24204300.8
(22) Date of filing: 02.10.2024
(51) Int. Cl.: H04L 67/1001, H04L 61/4511

(54) **USING ROUTING TABLES OF A GLOBAL SERVER LOAD BALANCING SYSTEM FOR PATH SELECTION**

(30) Priority: 11.10.2023 US 202318378877
(71) Applicant: VMware LLC, Palo Alto, CA 94304 (US)
(72) Inventor: Kabatov, Vlad A., Palo Alto, 94304 (US)
(74) Representative: Dilg, Haeusler, Schindelmann Patentanwaltsgesellschaft mbH

(57) **Abstract**

Some embodiments of the invention provide a method of using routing tables of GSLB DNS servers to perform path selection in response to DNS requests from client devices. At a first GSLB DNS server that operates in a first region and that maintains a first routing table, the method receives, from a client device, a DNS request for accessing a set of resources provided by a first server in the first region and a second server in a second region. The method determines, based on the first routing table and a second routing table associated with the second region, that a first path from the client device to the first server is shorter than a second path from the client device to the second server, and provides a network address associated with the first path to the client device for reaching the first server to access the set of resources.

## Description

### BACKGROUD

Today, load balancing algorithms (e.g., round-robin, weighted round-robin, least connections, hashing, URL hashing, source IP hashing, random, and least response time) used for selecting optimal paths for client devices in networks are not aware of the underlying network transport infrastructure. Additionally, these load balancing algorithms do not rely on automated methods and are manually defined, and do not rely on any standards-based path selection.

### BRIEF SUMMARY

Some embodiments of the invention provide a method for using routing tables on GSLB (global server load balancing) DNS (domain name service) servers operating in a network to perform path selection in response to DNS requests from client devices in the network. The method is performed at a first GSLB DNS server that operates in a first region serviced by the network and that maintains a first routing table. At the first GSLB DNS server, the method receives, from a particular client device operating in the network, a DNS request for accessing a set of resources that are provided by at least first server operating in the first region and a second server operating in a second region serviced by the network. Based on the first routing table and at least a second routing table associated with the second region, the method determines, at the first GSLB DNS server, that a first path from the particular client device to the first server is shorter than a second path from the particular client device to the second server. Based on the determination that the first path is shorter than the second path, the method provides, at the first GSLB DNS server, a network address associated with the first path to the particular client device for reaching the first server to access the set of resources.

In some embodiments, the set of resources is associated with the first server in the first routing table, and with the second server in the second routing table. The first server, in some embodiments, is a first set of servers (e.g., server cluster), and the second server is a second set of servers. In some embodiments, the first routing table specifies a network address of a first server resource (e.g., a first load balancer or local traffic manager) that is local to the first server set and through which the first server set can be reached, and the second routing table specifies a network address of a second server resource (e.g., a second load balancer or local traffic manager) that is local to the second server set and through which the second server set can be reached.

In order to determine that the first path is shorter than the second path, the GSLB DNS server of some embodiments first identifies a subnet associated with the particular client device. The GSLB DNS server of some embodiments then uses the identified subnet to perform lookups in the first and second routing tables to identify a particular routing protocol metric (e.g., a number of hops) specified in each of the first and second routing tables between the subnet associated with the particular client device and the set of resources.

When a value of the particular routing protocol metric specified in the first routing table between the subnet associated with the particular client device and the set of resources is less than a value of the particular routing protocol metric specified in the second routing table between the subnet associated with the particular client device and the set of resources, in some embodiments, the GSLB DNS server determines that the first path is shorter than the second path. For example, when the particular routing protocol metric corresponds to a number of hops between the particular client device and the set of resources, the GSLB DNS server selects the path having the fewest number of hops (i.e., the shortest path). The GSLB DNS server then provides to the particular client device the network address associated with the first path and through which the particular client device can reach the first set of servers. This network address, in some embodiments, is an IP (Internet protocol) address for the first server resource (e.g., first load balancer) that is local to the first set of servers.

In some embodiments, the second routing table is received by the first GSLB DNS server from a second GSLB DNS server operating in the second region. The first GSLB DNS server of some embodiments also provides the first routing table to the second GSLB DNS server. In some embodiments, the first and second GSLB DNS servers periodically synchronize the first and second routing tables by periodically exchanging updates to the first and second routing tables with each other (i.e., the first GSLB DNS server sends updates to the first routing table to the second GSLB DNS server, and the second GSLB DNS server sends updates to the second routing table to the first GSLB DNS server). In some embodiments, the first GSLB DNS server exchanges routing tables and updates to these routing tables with multiple GSLB DNS servers distributed across multiple regions serviced by the network, and uses all of these routing tables in determining the most geographically proximate servers or server sets that provide resources specified in DNS requests from multiple client devices.

The first GSLB DNS server of some embodiments builds and maintains the first routing table based on routes it receives from a next-hop router that is upstream from the first GSLB DNS server, while the second GSLB DNS server builds and maintains the second routing table based on routes it receives from a second next-hop router that is upstream from the second GSLB DNS server. For example, the routes received by the first and second GSLB DNS servers are BGP (Border Gateway Protocol) routes, in some embodiments. Additional examples of routing protocols used in some embodiments include OSPF (open shortest path first), IS-IS (intermediate system to intermediate system), RIP (routing information protocol), and EGP (exterior gateway protocol).

The preceding Summary is intended to serve as a brief introduction to some embodiments of the invention. It is not meant to be an introduction or overview of all inventive subject matter disclosed in this document. The Detailed Description that follows and the Drawings that are referred to in the Detailed Description will further describe the embodiments described in the Summary as well as other embodiments. Accordingly, to understand all the embodiments described by this document, a full review of the Summary, the Detailed Description, the Drawings, and the Claims is needed. Moreover, the claimed subject matters are not to be limited by the illustrative details in the Summary, the Detailed Description, and the Drawings.

### BRIEF DESCRIPTION OF FIGURES

The novel features of the invention are set forth in the appended claims. However, for purposes of explanation, several embodiments of the invention are set forth in the following figures.
**Figure 1** conceptually illustrates a diagram of a portion of a network in which some embodiments are implemented.
**Figure 2** illustrates a process performed by a GSLB DNS server of some embodiments to build and exchange routing tables for use in selecting paths for client devices in response to DNS requests from the client devices.
**Figure 3** illustrates an example of a portion of a BGP table of some embodiments.
**Figure 4** illustrates an example of a portion of a routing table of some embodiments.
**Figure 5** illustrates a process performed by a GSLB DNS server of some embodiments to select the best path for a client device trying to reach a set of resources.
**Figure 6** conceptually illustrates a network diagram in which a GSLB DNS server of some embodiments receives a DNS request from a client device.
**Figure 7** conceptually illustrates a network diagram in which the GSLB DNS server of some embodiments uses routing tables to identify an optimal (i.e., shortest) path for the client device to reach a set of resources specified in the DNS request, and provides routing information to the client device for reaching the set of resources in response to the DNS request.
**Figure 8** conceptually illustrates a network diagram of some embodiments in which a client device has established a connection with a router in order to reach the set of resources according to the routing information provided by the GSLB DNS server in response to the DNS request from the client device.
**Figure 9** conceptually illustrates a set of example routing tables of various regions, in some embodiments.
**Figure 10** conceptually illustrates a more detailed example of a GSLB system of some embodiments of the invention.
**Figure** 11 conceptually illustrates a computer system with which some embodiments of the invention are implemented.

### DETAILED DESCRIPTION

In the following detailed description of the invention, numerous details, examples, and embodiments of the invention are set forth and described. However, it will be clear and apparent to one skilled in the art that the invention is not limited to the embodiments set forth and that the invention may be practiced without some of the specific details and examples discussed.

Some embodiments of the invention provide a method for using routing tables on GSLB (global server load balancing) DNS (domain name service) servers operating in a network to perform path selection in response to DNS requests from client devices in the network. The method is performed at a first GSLB DNS server that operates in a first region serviced by the network and that maintains a first routing table. At the first GSLB DNS server, the method receives, from a particular client device operating in the network, a DNS request for accessing a set of resources that are provided by at least first server operating in the first region and a second server operating in a second region serviced by the network. Based on the first routing table and at least a second routing table associated with the second region, the method determines, at the first GSLB DNS server, that a first path from the particular client device to the first server is shorter than a second path from the particular client device to the second server. Based on the determination that the first path is shorter than the second path, the method provides, at the first GSLB DNS server, a network address associated with the first path to the particular client device for reaching the first server to access the set of resources.

In some embodiments, the set of resources is associated with the first server in the first routing table, and with the second server in the second routing table. The first server, in some embodiments, is a first set of servers (e.g., server cluster), and the second server is a second set of servers. In some embodiments, the first routing table specifies a network address of a first server resource (e.g., a first load balancer or local traffic manager) that is local to the first server set and through which the first server set can be reached, and the second routing table specifies a network address of a second server resource (e.g., a second load balancer or local traffic manager) that is local to the second server set and through which the second server set can be reached.

In order to determine that the first path is shorter than the second path, the GSLB DNS server of some embodiments first identifies a subnet associated with the particular client device. The GSLB DNS server of some embodiments then uses the identified subnet to perform lookups in the first and second routing tables to identify a particular routing protocol metric specified in each of the first and second routing tables between the subnet associated with the particular client device and the set of resources.

When a value of the particular routing protocol metric specified in the first routing table between the subnet associated with the particular client device and the set of resources is less than a value of the particular routing protocol metric specified in the second routing table between the subnet associated with the particular client device and the set of resources, in some embodiments, the GSLB DNS server determines that the first path is shorter than the second path. For example, when the particular routing protocol metric corresponds to a number of hops between the particular client device and the set of resources, the GSLB DNS server selects the path having the fewest number of hops (i.e., the shortest path). The GSLB DNS server then provides to the particular client device the network address associated with the first path and through which the particular client device can reach the first set of servers. This network address, in some embodiments, is an IP (Internet protocol) address for the first server resource (e.g., first load balancer) that is local to the first set of servers.

In some embodiments, the second routing table is received by the first GSLB DNS server from a second GSLB DNS server operating in the second region. The first GSLB DNS server of some embodiments also provides the first routing table to the second GSLB DNS server. In some embodiments, the first and second GSLB DNS servers periodically synchronize the first and second routing tables by periodically exchanging updates to the first and second routing tables with each other (i.e., the first GSLB DNS server sends updates to the first routing table to the second GSLB DNS server, and the second GSLB DNS server sends updates to the second routing table to the first GSLB DNS server). In other embodiments, the first and second GLSB DNS servers synchronize the first and second routing tables when route changes are detected. Also, in some embodiments, the first GSLB DNS server exchanges routing tables and updates to these routing tables with multiple GSLB DNS servers distributed across multiple regions serviced by the network, and uses all of these routing tables in determining the most geographically proximate servers or server sets that provide resources specified in DNS requests from multiple client devices.

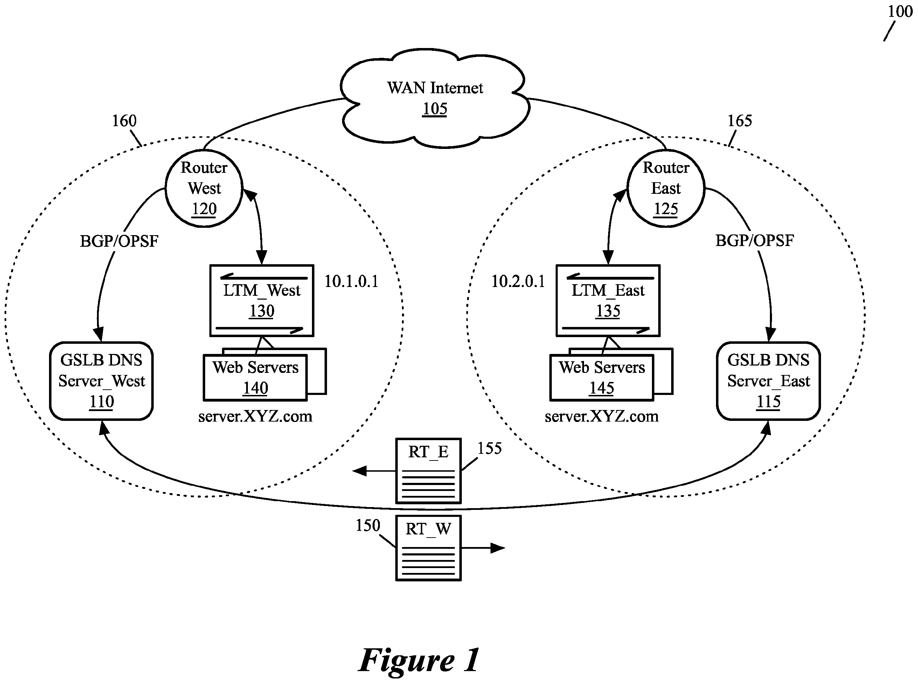

**Figure** 1 conceptually illustrates a diagram 100 of a portion of a network in which some embodiments are implemented. As shown, the diagram 100 includes a first region 160 and a second region 165. The first region 160 includes a GSLB DNS server 110 (i.e., GSLB DNS server west), a router 120 (i.e., router west), and an LTM (local traffic manager) 130 (i.e., LTM west) that load balances between a set of web servers 140. The second region 165 includes a GSLB DNS server 115 (i.e., GSLB DNS server east), a router 125 (i.e., router east), and an LTM 135 (i.e., LTM east) that load balances between a set of web servers 145. The routers 120 and 125 connect the first and second regions 160 and 165 to the WAN internet 105, as shown.

The routers 120 and 125 receive routes advertised by other forwarding elements, and use the received routes to build and populate routing tables. In the diagram 100, these routers 120 and 125 are respective upstream routers for the GSLB DNS servers 110 and 115, and advertise the routes they receive to the GSLB DNS servers 110 and 115.

As the GSLB DNS servers 110 and 115 receive the routes advertised by their respective upstream routers 120 and 125, the GSLB DNS servers 110 and 115 build their own respective routing tables, and populate the routing tables with the received routes. The advertised routes are associated with a particular routing protocol, in some embodiments. For example, in some embodiments, the routes received by the GSLB DNS servers 110 and 115 from their respective upstream routers 120 and 125 are BGP (Border Gateway Protocol) routes. Additional examples of routing protocols associated with the received routes of some embodiments include OSPF (open shortest path first), IS-IS (intermediate system to intermediate system), RIP (routing information protocol), and EGP (exterior gateway protocol).

The GSLB DNS servers 110 and 115 in the diagram 100 are configured to share their respective routing tables with each other. For example, the GSLB DNS server 110 sends a routing table 150 to the GSLB DNS server 115, while the GSLB DNS server 115 sends a routing table 155 to the GSLB DNS server 110, as illustrated. While only two GSLB DNS servers 110 and 115 are shown in the diagram 100, any number of GSLB DNS servers are included in other embodiments. In some such other embodiments, all of the GSLB DNS servers exchange routing tables with each other such that each GSLB DNS server has the routing table of each other GSLB DNS server.

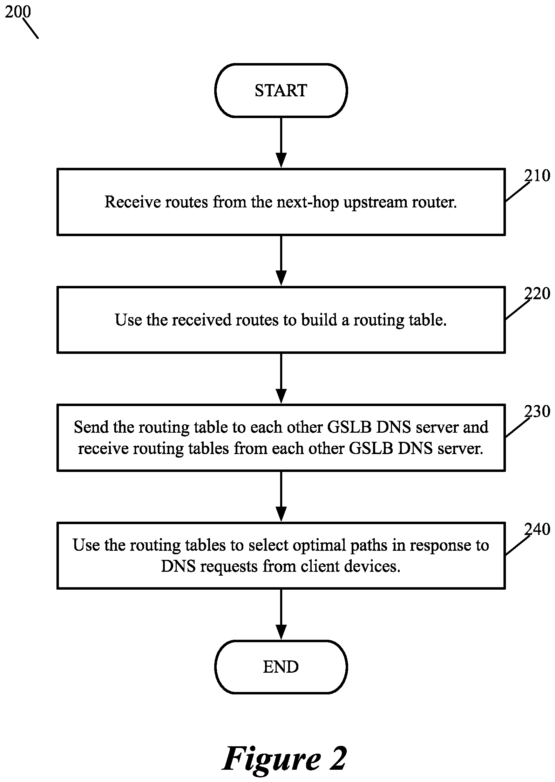

**Figure** 2 illustrates a process 200 performed by a GSLB DNS server of some embodiments to build and exchange routing tables for use in selecting paths for client devices in response to DNS requests from the client devices. The process 200 will be described with references to the diagram 100. The process 200 starts when the GSLB DNS server receives (at 210) routes from the next-hop upstream router. In the diagram 100, for instance, the connections between the GSLB DNS servers 110 and 115 and their respective upstream routers 120 and 125 are illustrated with a BGP/OSPF label to indicate the advertising of BGP or OSPF routes from the routers 120 and 125 to the GSLB DNS servers 110 and 115, respectively. In other embodiments, other routing protocols are used, such as IS-IS-, RIP, or EGP.

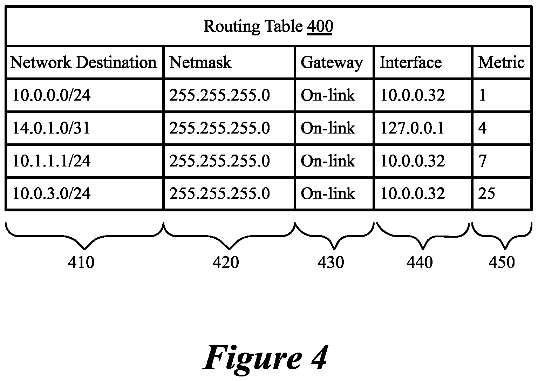

The process 200 uses (at 220) the received routes to build a routing table. That is, the GSLB DNS server generates a routing table that it then populates using the received routes from the upstream router. **Figure 4** illustrates an example of a portion of a routing table 400 of some embodiments. As shown, the routing table 400 includes network destinations 410, netmasks 420, gateways 430, interfaces 440, and metrics 450. The network destinations 410 specify IP addresses of network destinations, the netmasks 420 specify the subnet masks that identify whether a host belongs to the local or remote network, the gateways 430 specify the next hop gateway (or neighboring device's IP) to which packets are forwarded to reach the corresponding network destination 410, the interfaces 440 specify inbound network interfaces (i.e., outgoing interfaces) to be used when forwarding packets to the next hop, and the metrics 450 that assign values (e.g., values used to indicate preference level) to each available route to a specific network.

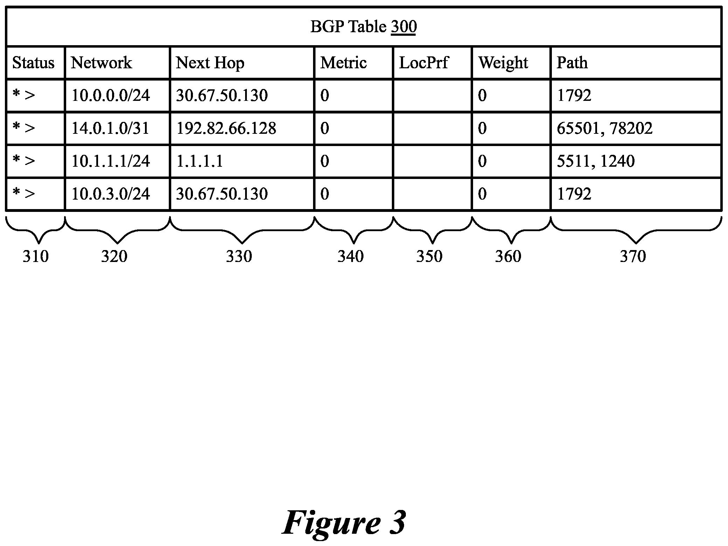

In some embodiments, in addition to the routing table, the GLSB DNS server also builds and maintains other tables associated with various protocols associated with the advertised routes. For instance, in some embodiments, the routes are BGP advertised routes, and the GSLB DNS server maintains a BGP table populated with these routes. **Figure 3** illustrates an example of a portion of a BGP table 300 of some embodiments. The BGP table 300 has seven (7) columns, including a status column 310, a network column 320, a next hop column 330, a metric column 340, a local preference column 350, a weight column 360, and a path column 370.

The status column 310 specifies a status, or statues, of the route (e.g., "s" for supported, "h" for history, "*" for valid, ">" for best, "i" for internal, "x" for external, etc.). The network column 320 specifies a destination IP address (e.g., destination subnet or supernet address) with which the route is associated. The next hop column 330 specifies the IP address of the next-hop device for reaching the specified destination IP address. The metric column 340 specifies a metric, or cost, associated with the route. The local preference column 350 specifies a local preference attribute that is used in some embodiments to granularly modify routing to ensure a preferred path is chosen for external BGP paths. The weight column 360 specifies a simple number used to indicate preferences (e.g., the higher the weight value, the higher the preference for the associated path). Lastly, the path column 370 specifies a list of one or more AS (autonomous system) numbers through which the associated route traverses to reach a destination (e.g., a number of hops associated with the path).

The process 200 sends (at 230) the routing table (and/or other tables, such as a BGP table) to each other GSLB DNS server and receives routing tables (and/or other tables, such as BGP tables) from each other GSLB DNS server. In the diagram 100, for instance, the GLSB DNS servers 110 and 115 exchange their respective routing tables 150 and 155 with each other, as illustrated. While the diagram 100 includes two GLSB DNS servers, other embodiments include any number of GSLB DNS servers that all share their routing tables (and/or other tables, such as a BGP tables) with each other GSLB DNS server.

The process 200 uses (at 240) the routing tables (and/or other tables exchanged) to select optimal paths in response to DNS requests from client devices. For example, when using routing tables, the GSLB DNS servers of some embodiments use the source IP address of DNS requests received from client devices to perform a reverse lookup by using the source IP address as the destination IP address to identify the optimal path. In some embodiments, the optimal path is the path associated with the best metric value (e.g., according to the values in the metric column 450 in the routing table 400).

As a second example, when using BGP tables, for instance, the GSLB DNS servers of some embodiments use the AS path numbers as the metric for determining the optimal path. For instance, in the BGP table 300, the GSLB DNS servers of some embodiments identify the optimal path by identifying the BGP table that includes the path having the fewest AS path numbers 370, which, in some embodiments, are indicative of the path having the fewest number of hops (i.e., shortest path).

As third example, in some embodiments, the GSLB DNS servers use an OSPF metric that is associated with the bandwidth of a link to identify the optimal path. For instance, in some embodiments, an Ethernet link is associated with a bandwidth of 10 Mb/s and a cost of 10, while a T1 link is associated with a bandwidth of 1.544 Mb/s and a cost of 64. Accordingly, the GSLB DNS server of some embodiments selects the path associated with using the Ethernet link due to the lower associated cost (i.e., a cost of 10 as opposed to a cost of 64). The OSPF metric is included in the routing tables, in some embodiments. Additional details regarding optimal path selection (e.g., paths having the lowest value for the routing protocol metric) between client devices and resources (e.g., resources of web servers 140 or 145) will be further described below. Following 240, the process 200 ends.

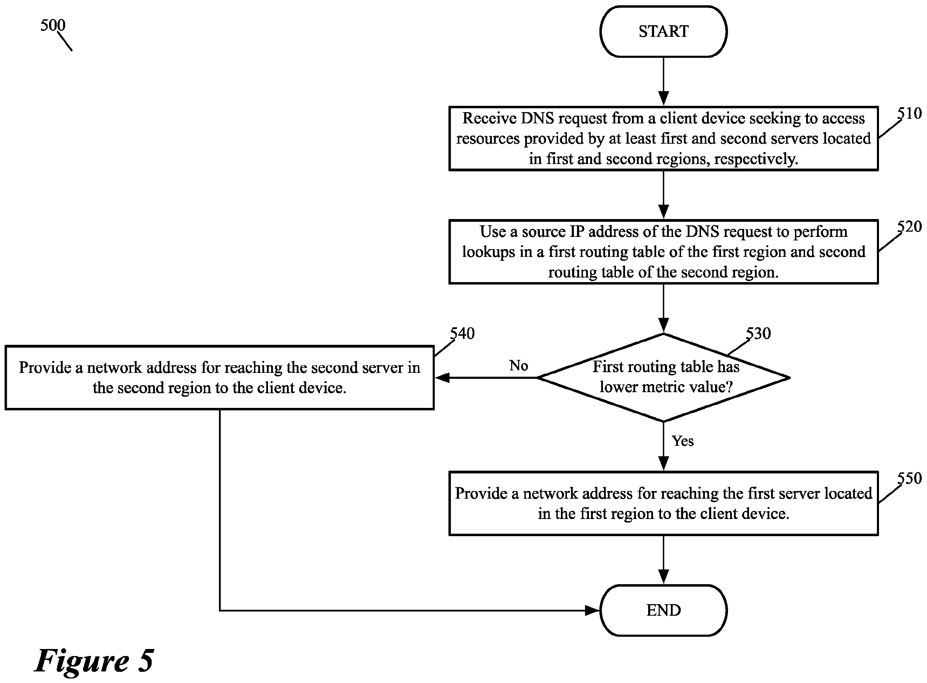

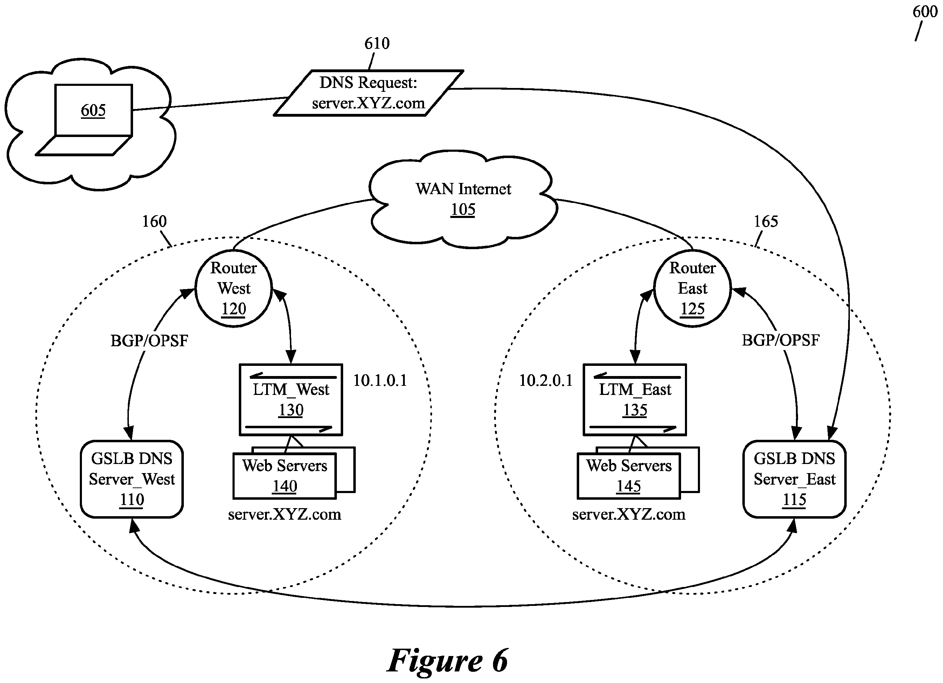

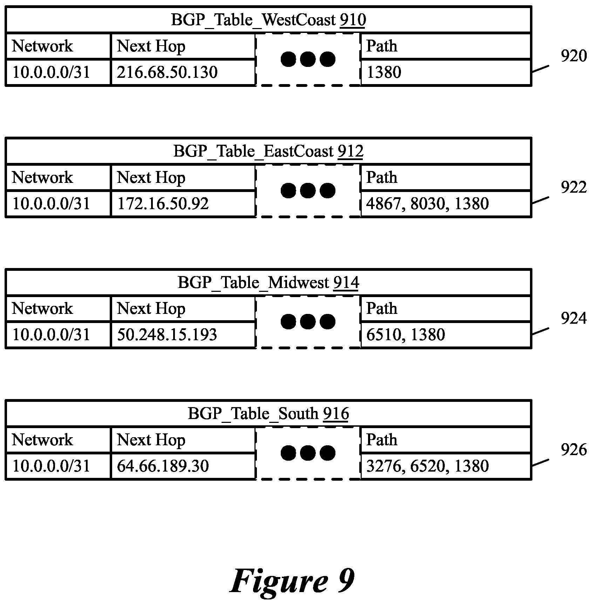

**Figure 5** illustrates a process 500 performed by a GSLB DNS server of some embodiments to select the best path for a client device trying to reach a set of resources. The process 500 is performed after the GSLB DNS server has performed the process 200 described above, in some embodiments. **Figure 5** will be described with references to **Figures 6****,** **7****, and** **8****,** which conceptually illustrate network diagrams 600, 700, and 800, respectively, in which a GSLB DNS server receives a DNS request from a client device, uses routing tables to identify an optimal path for the client device to reach a set of resources specified in the DNS request, and provides routing information to the client device for the client device to use to reach the set of resources in response to the DNS request. The process 500 will also be described with references to **Figure 9****,** which conceptually illustrates a set of example BGP tables of various regions, in some embodiments.

The process 500 starts when the GSLB DNS server receives (at 510) a DNS request from a client device seeking to access resources provided by at least first and second servers located in first and second regions, respectively. In the diagram 600 of **Figure 6****,** the GSLB DNS server 115 in the second region 165 receives a DNS request 610 from a client device 605, as illustrated. The DNS request 610 is looking to access the resource "server.XYZ.com", which is provided by web servers 140 in region 160 and by web servers 145 in region 165. In some embodiments, additional web servers (not shown) in additional regions (not shown) also provide the requested resource.

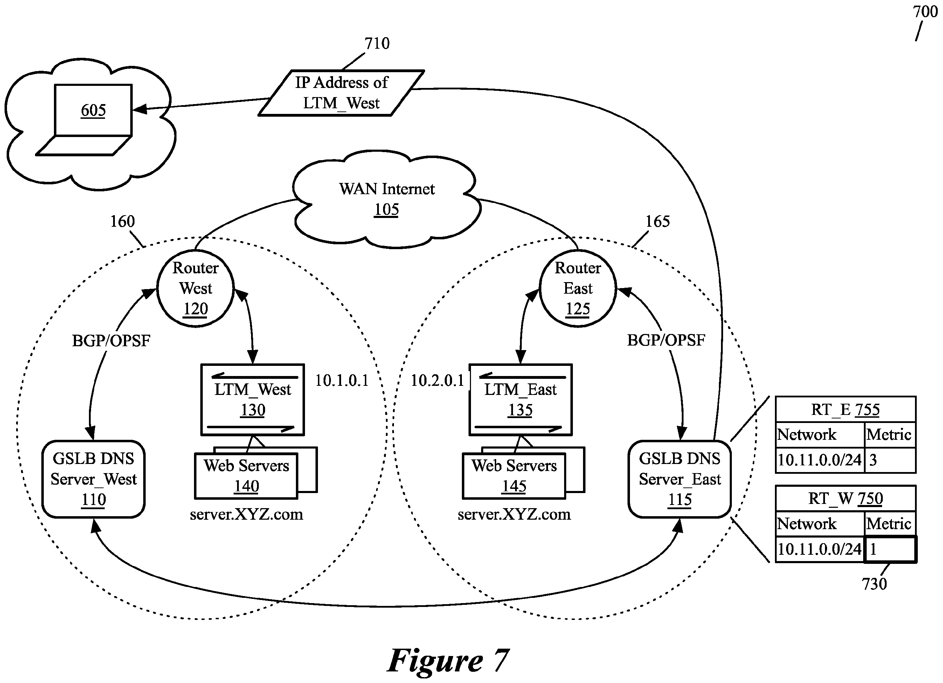

The process 500 uses (at 520) a source IP address of the DNS request to perform lookups in a first routing table of the first region and a second routing table of the second region. In the diagram 700 of Figure 7, the GLSB DNS server 115 that received the DNS request 610 from the client device 605 performs lookups in routing table 755, which is the routing table built and maintained by the GSLB DNS server 115, and routing table 750, which is the routing table built and maintained by the GSLB DNS server 110 and that the GLSB DNS server 115 receives from the GSLB DNS server 110 (e.g., as illustrated in the diagram 100 described above).

The process 500 determines (at 530) whether the first routing table has a lower metric value (i.e., for a particular routing protocol metric) than the second table. In some embodiments, the particular routing protocol metric is a number of hops, a weight value associated with a cost for using the path, etc. **Figure 9****,** for example, illustrates an entry for a destination subnet "10.0.0.0/31" associated with a particular client device in four different BGP tables of four different regions. More specifically, the BGP tables include a BGP table 910 for a west coast region, a BGP table 912 for an east coast region, a BGP table 914 for a Midwest region, and a BGP table 916 for a south region.

Each BGP table 910-916 specifies a path between a subnet associated with a client device and the next-hop upstream router connected to the GSLB DNS server that built and maintains the BGP table (i.e., a path from the client device to the region associated with the routing table). As shown, the BGP table 910 for the west coast region includes a path 920 with one hop, the BGP table 912 for the east coast region includes a path 922 with three hops, the BGP table 914 for the Midwest region includes a path 924 with two hops, and the BGP table 916 for the south region includes a path 926 with three hops.

Based on this set of BGP tables 910-916, a GSLB DNS server of any of the four regions (i.e., west coast, east coast, Midwest, or south) would determine that the resources provided by servers in the west coast region, for which the corresponding BGP table 910 specifies the path 920 with just one hop (i.e., one hop from the client device to a router for the west coast region), is the optimal path (i.e., shortest path) for the client device to access the resources.

In some embodiments, two or more tables (e.g., two or more routing tables or other tables exchanged between GLSB DNS servers) can be identified as having the shortest path (e.g., two or more routing tables can specify paths associated with the lowest routing protocol metric out of all of the routing tables). In some such embodiments, the GSLB DNS server selects the most optimal path from the identified shortest paths according to additional criteria, such as the weight attributes associated with the paths, the local preference attributes associated with the paths, and/or the metric attributes associated with the paths in the example BGP table 300 described above. For instance, in some embodiments, when the tables used for the lookups are BGP tables, the path associated with the highest weight (i.e., highest preference) is selected from a set of paths having equal numbers of hops (i.e., based on the AS path attributes).

Returning to the process 500, when the process determines that the first routing table does not have a shorter path than the second routing table (i.e., the second routing table has the shorter path), the process 500 transitions to provide (at 540) a network address for reaching the second server in the second region to the client device. For instance, in the diagram 700, the path in the "first" routing table 755 (i.e., the routing table built and maintained by the GLSB DNS server 115 that received the request 610) is associated with a metric of 3, while the path in the "second" routing table 750 is associated with a metric of 1 730.

As such, the GSLB DNS server 115 determines that the path that is associated with the metric 1 730 as specified in the routing table 750 is the optimal path for the client device 605 to access the requested resource "server.XYZ.com", and provides to the client device 605 an IP address of the LTM 130 to enable the client device 605 to access the resource "server.XYZ.com" from the web servers 140 in the region 160.

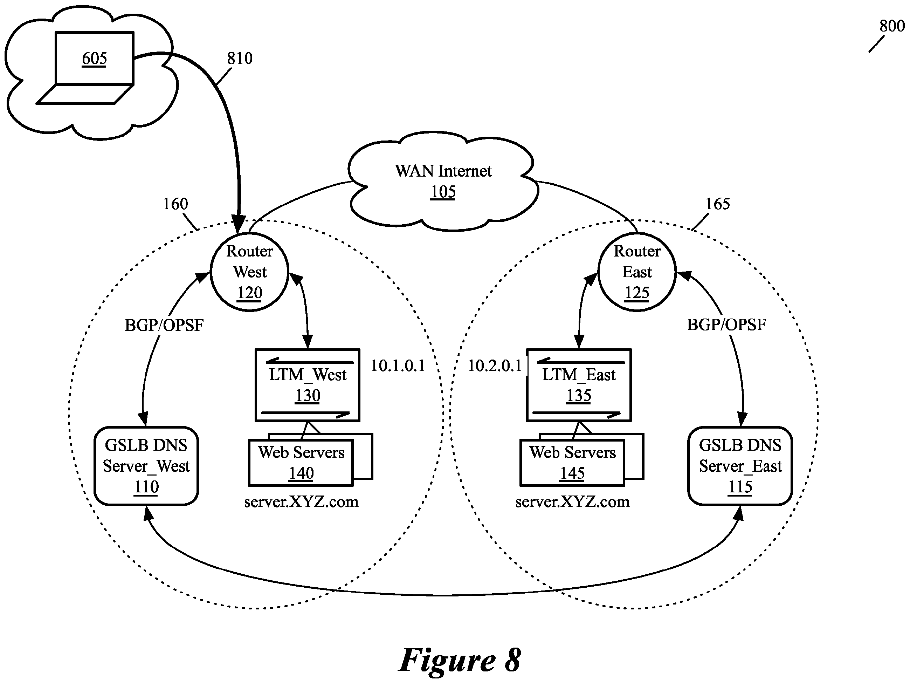

In the diagram 800 of **Figure 8****,** for example, the client device 605 has a connection 810 established with the router west 120 through which the LTM west 130, and subsequently web servers 140, can be reached. In some embodiments, the connection 810 is established over the WAN Internet 105. In other embodiments, the connection 810 is established over an intervening network fabric that includes a private network (e.g., an MPLS (multiprotocol label switching) network), or includes one or more public networks, such as the Internet (i.e., WAN Internet 105) and/or one or more networks of one or more public clouds. In still other embodiments, the intervening network fabric includes a combination of public and private networks (such as those mentioned above). The intervening network fabric of some embodiments includes wired or wireless connections, various network forwarding elements (e.g., switches, routers, etc.), etc.

The wired or wireless connections, in some embodiments, are established over one or more links. The links of some embodiments include wired and wireless links, point-to-point links, broadcast links, multipoint links, point-to-multipoint links, public links, and private links (e.g., MPLS (multiprotocol label switching) links). The wired links of some embodiments can include, e.g., coaxial cables and fiber optic cables.

Once the client device 605 has established the connection 810, the client device 605 then routes its packets intended for the resource "server.XYZ.com" to the LTM 130 via the connection 810 to the router west 120. The LTM 130 load balances these received requests between the web servers 140 that provide the service requested by the client device 605, in some embodiments. Following 540, the process 500 ends.

When the first routing does have a shorter path than the second routing table, the process 500 transitions to provide (at 550) a network address for reaching the first server located in the first region to the client device. In the diagram 600, if the request 610 was alternatively received by the GLSB DNS server 110, the GSLB DNS server 110 in the diagram 700 would determine that its routing table 750 specifies the shorter path, and provide the IP address of the LTM 130, which is in the same region 160 as the GSLB DNS server 110, to the client device 605 for use in accessing the requested resource "web.dom.gov". Following 550, the process 500 ends.

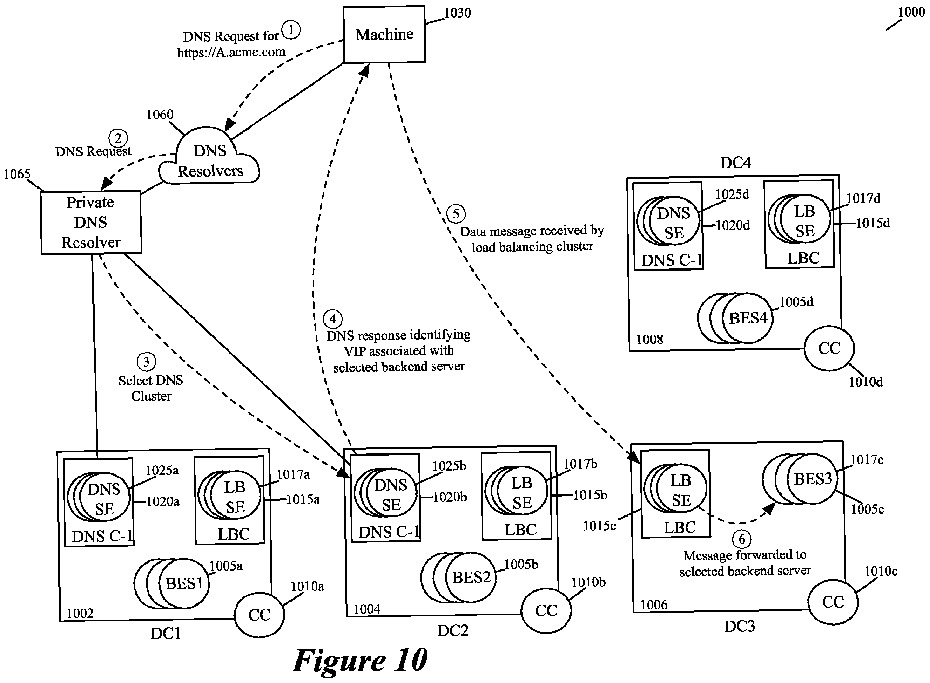

**Figure 10** illustrates a more detailed example of a GSLB system 1000 that implements the path selection method of some embodiments of the invention. In this example, backend application servers 1005 are deployed in four datacenters 1002-1008, three of which are private datacenters 1002-1006 and one of which is a public datacenter 1008. The datacenters in this example are in different geographical sites (e.g., different neighborhoods, different cities, different states, different countries, etc.).

A cluster of one or more controllers 1010 are deployed in each datacenter 1002-1008. Each datacenter also has a cluster 1015 of load balancers 1017 to distribute the data message load across the backend application servers 1005 in the datacenter. In this example, three datacenters 1002, 1004 and 1008 also have a cluster 1020 of DNS service engines 1025 to perform DNS operations to process (e.g., to provide network addresses for domain names provided by) for DNS requests submitted by machines 1030 inside or outside of the datacenters. In some embodiments, the DNS requests include requests for fully qualified domain name (FQDN) address resolutions.

**Figure 10** illustrates the resolution of an FQDN that refers to a particular application "A" that is executed by the servers of the domain "acme.com". As shown, this application is accessed through https and the URL "A.acme.com". The DNS request for this application is resolved in three steps. First, a public DNS resolver 1060 initially receives the DNS request and forwards this request to the private DNS resolver 1065 of the enterprise that owns or manages the private datacenters 1002-1006.

Second, the private DNS resolver 1065 selects one of the DNS clusters 1020. This selection is random in some embodiments, while in other embodiments it is based on a set of load balancing criteria that distributes the DNS request load across the DNS clusters 1020. In the example illustrated in **Figure 10****,** the private DNS resolver 1065 selects the DNS cluster 1020b of the datacenter 1004.

Third, the selected DNS cluster 1020b resolves the domain name to an IP address. In some embodiments, each DNS cluster includes multiple DNS service engines 1025, such as DNS service virtual machines (SVMs) that execute on host computers in the cluster's datacenter. When a DNS cluster 1020 receives a DNS request, a frontend load balancer (not shown) in some embodiments selects a DNS service engine 1025 in the cluster to respond to the DNS request, and forwards the DNS request to the selected DNS service engine. Other embodiments do not use a frontend load balancer, and instead have a DNS service engine serve as a frontend load balancer that selects itself or another DNS service engine in the same cluster for processing the DNS request.

The DNS service engine 1025b that processes the DNS request then uses a set of criteria to select one of the backend server clusters 1005 for processing data message flows from the machine 1030 that sent the DNS request. As described above, the set of criteria to select one of the backend server cluster 1005 involves using routing tables built and maintained by the DNS service engine 1025b that is processing the DNS request, as well as the routing tables of each other DNS service engine 1025, to identify which routing table specifies the shortest path between the client device from which the DNS request originates and the requested URL.

In other embodiments, additional criteria is used when two or more paths are identified as being the shortest path (i.e., two or more paths include the same number of hops). Examples of additional criterial used in some such other embodiments includes (1) health metrics that are generated from health monitoring that the DNS service engines perform, (2) criteria that is generated from these health metrics, and/or (3) load balancing criteria that the DNS service engines use to distribute the data message load on backend servers that execute application "A."

In the example illustrated in **Figure 10****,** the selected backend server cluster is the server cluster 1005c in the private datacenter 1006. After selecting this backend server cluster 1005c for the DNS request that it receives, the DNS service engine 1025b of the DNS cluster 1020b returns a response to the requesting machine. As shown, this response includes the VIP address associated with the selected backend server cluster 1005. In some embodiments, this VIP address is associated with the local load balancer cluster 1015c that is in the same datacenter 1006 as the selected backend server cluster.

After getting the VIP address, the machine 1030 sends one or more data message flows to the VIP address for a backend server cluster 1005 to process. In this example, the data message flows are received by the local load balancer cluster 1015c. In some embodiments, each load balancer cluster 1015 has multiple load balancing engines 1017 (e.g., load balancing SVMs) that execute on host computers in the cluster's datacenter.

When the load balancer cluster receives the first data message of the flow, a frontend load balancer (not shown) in some embodiments selects a load balancing service engine 1017 in the cluster to select a backend server 1005 to receive the data message flow, and forwards the data message to the selected load balancing service engine. Other embodiments do not use a frontend load balancer, and instead have a load balancing service engine in the cluster serve as a frontend load balancer that selects itself or another load balancing service engine in the same cluster for processing the received data message flow.

When a selected load balancing service engine 1017 processes the first data message of the flow, this service engine uses a set of load balancing criteria (e.g., a set of weight values) to select one backend server from the cluster of backend servers 1005c in the same datacenter 1006. The load balancing service engine then replaces the VIP address with an actual destination IP (DIP) address of the selected backend server, and forwards the data message and subsequent data messages of the same flow to the selected backend server. The selected backend server then processes the data message flow, and when necessary, sends a responsive data message flow to the machine 1030. In some embodiments, the responsive data message flow is through the load balancing service engine that selected the backend server for the initial data message flow from the machine 1030.

While the GSLB DNS servers of some embodiments facilitate the sharing of their routing tables with each other, the controllers 1010 of other embodiments facilitate the sharing of GSLB DNS server routing tables. Additionally, the controllers 1010 of some embodiments define groups of load balancers 1017 and/or backend servers 1005 to monitor, to assign the different groups to different DNS service engines 1025, and to configure these servers and/or clusters to perform health monitoring that, in some embodiments, is used as additional criteria for path selection by the GSLB DNS servers (i.e., DNS service engines 1025).

In some embodiments, the controllers 1010 generate and update a hash wheel (not shown) that associates different DNS service engines 1025 with different load balancers 1017 and/or backend servers 1005 to monitor. In some embodiments, the controllers 1010 provide each DNS service engine 1025 with a copy of this hash wheel, and a hash generator (not shown), such as a hash function, that generates a hash value from different identifiers of different resources that are to be monitored. For each resource, each DNS service engine 1025 in some embodiments (1) uses the hash generator to generate a hash value from the resource's identifier, (2) identifies the hash range that contains the generated hash value, (3) identifies the DNS service engine associated with the identified hash range, and (4) adds the resource to its list of resources to monitor when it is the identified DNS service engine identified by the hash wheel for the resource.

As mentioned above, in some embodiments, the controllers 1010 facilitate the sharing of GSLB DNS server routing tables. For example, the controllers 1010 of some embodiments collect routing tables that their respective DNS service engines 1025 (e.g., the DNS service engines in the same datacenters as the controllers) generate, and distribute the routing tables to other DNS service engines 1025. In some embodiments, a first controller in a first datacenter distributes routing tables to a set of DNS service engines in a second datacenter by providing the routing tables to a second controller in the second datacenter to forward the data to the set of DNS service engines in the second datacenter. While **Figure 10** and its accompanying discussion refer to just one controller in each datacenter 1002-1008, one of ordinary skill will realize that in some embodiments a cluster of two or more controllers are used in each datacenter 1002-1008.

Many of the above-described features and applications are implemented as software processes that are specified as a set of instructions recorded on a computer-readable storage medium (also referred to as computer-readable medium). When these instructions are executed by one or more processing unit(s) (e.g., one or more processors, cores of processors, or other processing units), they cause the processing unit(s) to perform the actions indicated in the instructions. Examples of computer-readable media include, but are not limited to, CD-ROMs, flash drives, RAM chips, hard drives, EPROMs, etc. The computer-readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some embodiments, multiple software inventions can be implemented as sub-parts of a larger program while remaining distinct software inventions. In some embodiments, multiple software inventions can also be implemented as separate programs. Finally, any combination of separate programs that together implement a software invention described here is within the scope of the invention. In some embodiments, the software programs, when installed to operate on one or more electronic systems, define one or more specific machine implementations that execute and perform the operations of the software programs.

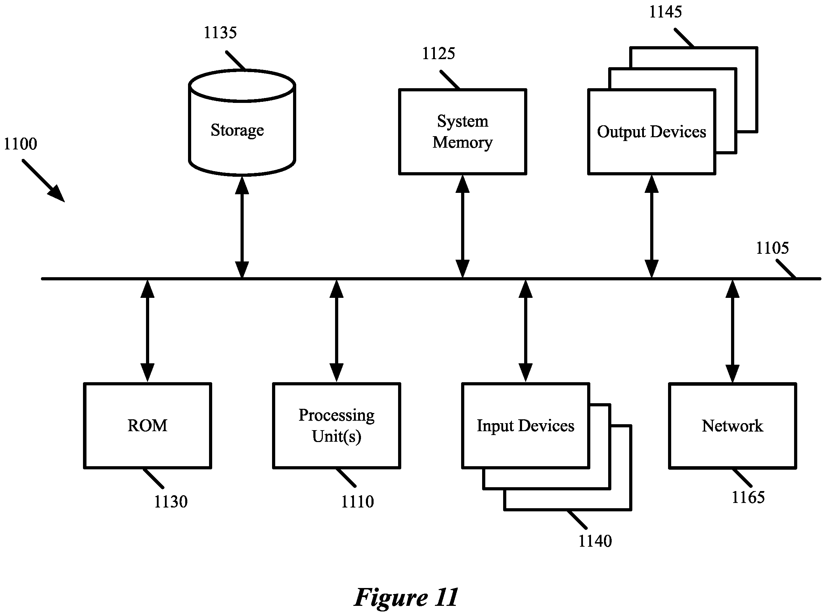

**Figure 11** conceptually illustrates a computer system 1100 with which some embodiments of the invention are implemented. The computer system 1100 can be used to implement any of the above-described hosts, controllers, gateway, and edge forwarding elements. As such, it can be used to execute any of the above described processes. This computer system 1100 includes various types of non-transitory machine-readable media and interfaces for various other types of machine-readable media. Computer system 1100 includes a bus 1105, processing unit(s) 1110, a system memory 1125, a read-only memory 1130, a permanent storage device 1135, input devices 1140, and output devices 1145.

The bus 1105 collectively represents all system, peripheral, and chipset buses that communicatively connect the numerous internal devices of the computer system 1100. For instance, the bus 1105 communicatively connects the processing unit(s) 1110 with the read-only memory 1130, the system memory 1125, and the permanent storage device 1135.

From these various memory units, the processing unit(s) 1110 retrieve instructions to execute and data to process in order to execute the processes of the invention. The processing unit(s) 1110 may be a single processor or a multi-core processor in different embodiments. The read-only-memory (ROM) 1130 stores static data and instructions that are needed by the processing unit(s) 1110 and other modules of the computer system 1100. The permanent storage device 1135, on the other hand, is a read-and-write memory device. This device 1135 is a nonvolatile memory unit that stores instructions and data even when the computer system 1100 is off. Some embodiments of the invention use a mass-storage device (such as a magnetic or optical disk and its corresponding disk drive) as the permanent storage device 1135.

Other embodiments use a removable storage device (such as a floppy disk, flash drive, etc.) as the permanent storage device. Like the permanent storage device 1135, the system memory 1125 is a read-and-write memory device. However, unlike storage device 1135, the system memory 1125 is a volatile read-and-write memory, such as random access memory. The system memory 1125 stores some of the instructions and data that the processor needs at runtime. In some embodiments, the invention's processes are stored in the system memory 1125, the permanent storage device 1135, and/or the read-only memory 1130. From these various memory units, the processing unit(s) 1110 retrieve instructions to execute and data to process in order to execute the processes of some embodiments.

The bus 1105 also connects to the input and output devices 1140 and 1145. The input devices 1140 enable the user to communicate information and select commands to the computer system 1100. The input devices 1140 include alphanumeric keyboards and pointing devices (also called "cursor control devices"). The output devices 1145 display images generated by the computer system 1100. The output devices 1145 include printers and display devices, such as cathode ray tubes (CRT) or liquid crystal displays (LCD). Some embodiments include devices such as touchscreens that function as both input and output devices 1140 and 1145.

Finally, as shown in **Figure 11****,** bus 1105 also couples computer system 1100 to a network 1165 through a network adapter (not shown). In this manner, the computer 1100 can be a part of a network of computers (such as a local area network ("LAN"), a wide area network ("WAN"), or an Intranet), or a network of networks (such as the Internet). Any or all components of computer system 1100 may be used in conjunction with the invention.

Some embodiments include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, any other optical or magnetic media, and floppy disks. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some embodiments are performed by one or more integrated circuits, such as application-specific integrated circuits (ASICs) or field-programmable gate arrays (FPGAs). In some embodiments, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms "display" or "displaying" mean displaying on an electronic device. As used in this specification, the terms "computer-readable medium," "computer-readable media," and "machine-readable medium" are entirely restricted to tangible, physical objects that store information in a form that is readable by a computer. These terms exclude any wireless signals, wired download signals, and any other ephemeral or transitory signals.

While the invention has been described with reference to numerous specific details, one of ordinary skill in the art will recognize that the invention can be embodied in other specific forms without departing from the spirit of the invention. Thus, one of ordinary skill in the art would understand that the invention is not to be limited by the foregoing illustrative details, but rather is to be defined by the appended claims.

## Claims

1. A method of using routing tables of GSLB (global server load balancing) DNS (domain name service) servers operating in a network to perform path selection in response to DNS requests from client devices in the network, the method comprising:
at a first GSLB DNS server that operates in a first region serviced by the network and that maintains a first routing table:
receiving, from a particular client device operating in the network, a DNS request for accessing a set of resources that are provided by at least first server operating in the first region and a second server operating in a second region serviced by the network;
determining, based on the first routing table and at least a second routing table associated with the second region, that a first path from the particular client device to the first server is shorter than a second path from the particular client device to the second server; and
based on said determining, providing a network address associated with the first path to the particular client device for reaching the first server to access the set of resources.

2. The method of claim 1, wherein
determining that the first path from the particular client device to the first server is shorter than the second path from the particular client device to the second server comprises (i) identifying a subnet associated with the particular client device and (ii) determining that the first path from the identified subnet associated with the particular client device to the first server is shorter than the second path from the identified subnet associated with the particular client device to the second server.

3. The method of claim 2, wherein
determining that the first path is shorter than the second path further comprises (i) using the subnet associated with the particular client device to identify first and second metric values for a particular routing protocol metric in the first and second routing tables, and (ii) determining that the first metric value associated with the first path is less than the second metric value associated with the second path.

4. The method of claim 3, wherein:
the particular routing protocol metric comprises a number of hops;
the first metric value comprises a first number of hops specified between the set of resources and the identified subnet in the first routing table, and the second metric value comprises a second number of hops specified between the set of resources and the identified subnet in the second routing table; and
the first number of hops is less than the second number of hops.

5. The method of claim 3 or 4, wherein
the first routing table specifies a network address of a first router through which the first server can be reached as a network address for accessing the set of resource and the second routing table specifies a network address of a second router through which the second server can be reached as a network address for accessing the set of resources.

6. The method of claim 3, 4 or 5, wherein:
the first server comprises a first set of servers that each provide the set of resources;
the second server comprises a second set of servers that each provide the set of resources;
the first routing table includes a network address of a first load balancer that is local to the first router and that load balances between the first set of servers; and
the second routing table specifies a network address of a second load balancer that is local to the second router and that load balances between the second set of servers.

7. The method of any one of the claims 1 to 6, further comprising
receiving the second routing table from a second GSLB DNS server operating in the second region.

8. The method of claim 7, wherein
receiving the second routing table from the second GSLB DNS server further comprises providing the first routing table to the second GSLB DNS server.

9. The method of claim 8, further comprising
periodically synchronizing the first and second routing tables with the second GSLB DNS server by (i) periodically receiving updates to the second routing table from the second GSLB DNS server and (ii) periodically providing updates to the first routing table to the second GSLB DNS server.

10. The method of any one of the claims 1 to 9, wherein
the first routing table is built and maintained by the first GSLB DNS server based on routes received by the first GSLB DNS server from a first next-hop router upstream from the first GSLB DNS server.

11. The method of claim 10, wherein
the second routing table is built and maintained by a second GSLB DNS server based on routes received by the second GSLB DNS server from a second next-hop router upstream from the second GSLB DNS server.

12. The method of claim 11, wherein
the routes received by the first and second GSLB DNS servers comprise routes received via BGP (Border Gateway Protocol) advertising;
or wherein
the routes received by the first and second GSLB DNS servers comprise routes received via OSPF (open shortest path first).

13. The method of any one of the claims 1 to 12, wherein
the particular client device is a first client device and the DNS request is a first DNS request, the method further comprising:
at the first GSLB DNS server:
receiving, from a second client device operating in the network, a second DNS request for accessing the set of resources provided by the first and second servers;
determining, based on the first and second routing tables, that a third path from the particular client device to the second server is shorter than a fourth path from the particular client device to the first server; and
based on said determining, providing a network address associated with the third path to the second client device for reaching the second server to access the set of resources;
wherein in particular
the first client device operates in the first region and the second client device operates in the second region.

14. The method of any one of the claims 1 to 13, wherein
providing the network address for reaching the first server to the particular client device comprises providing an IP (Internet protocol) address for a load balancer that is local to the first server.

15. A non-transitory machine readable medium storing a program for execution by a set of processing units, the program for using routing tables of GSLB (global server load balancing) DNS (domain name service) servers operating in a network to perform path selection in response to DNS requests from client devices in the network, the program comprising sets of instructions for controlling and/or carrying out a method as set forth in any one of the preceding claims.
